# EUROPÄISCHE PATENTSCHRIFT

(11) **EP 2 526 001 B1**
(45) Veröffentlichungstag und Bekanntmachung des Hinweises auf die Patenterteilung: **29.03.2017**
(21) Anmeldenummer: 11701230.2
(22) Anmeldetag: 19.01.2011
(51) Int. Cl.: B60T 8/36, F04B 17/03, F04B 53/22, H05K 5/00, H05K 7/14, H01R 12/00, B60R 16/023

(54) **SYSTEMKOMPONENTE FÜR EIN KRAFTFAHRZEUG, INSBESONDERE PUMPENKOMPONENTE, SOWIE PUMPE**
SYSTEM COMPONENT FOR A MOTOR VEHICLE, IN PARTICULAR A PUMP COMPONENT, AND PUMP
COMPOSANT DE SYSTÈME POUR UN VÉHICULE À MOTEUR, EN PARTICULIER COMPOSANT DE POMPE, AINSI QUE POMPE

(30) Priorität: 22.01.2010 DE 102010001117
(43) Veröffentlichungstag der Anmeldung: 28.11.2012
(73) Patentinhaber: Robert Bosch GmbH, 70442 Stuttgart (DE)
(72) Erfinder: HEIN, Bernd, 72270 Baiersbronn/Schoenmuenzach (DE); THIERY, Jerome, F-67100 Strasbourg (FR); MAHFOUDH, Samir, 77815 Buehl (DE)
(86) Internationale Anmeldenummer: PCT/EP2011/050665
(87) Internationale Veröffentlichungsnummer: WO 2011/089150

(56) Entgegenhaltungen:
- EP-A1- 0 618 760
- EP-A2- 0 604 111
- EP-A2- 0 728 645
- WO-A1-2009/071381
- DE-A1- 19 518 522
- DE-A1-102008 040 018
- DE-B3-102004 050 715

## Beschreibung

Die Erfindung betrifft eine Systemkomponente für ein Kraftfahrzeug, insbesondere eine Pumpenkomponente für eine Pumpe eines Kühlkreislaufs des Kraftfahrzeugs. Ferner betrifft die Erfindung eine Pumpe, insbesondere eine Kühlkreislaufpumpe, für ein Kraftfahrzeug.

### Stand der Technik

Bei der Konstruktion und Auslegung von Systemkomponenten, wie z. B. einer Kühlkreislaufpumpe für ein Kraftfahrzeug, sind die im Betrieb des Kraftfahrzeugs zu erwartenden dynamischen Belastungen der Bauteile der Systemkomponenten, insbesondere der Leiterplatten und Pin-Verbindungen, eine Herausforderung für die Entwickler in Bezug auf Dauerhaltbarkeit. Oftmals führen die hohen Lastenheftanforderungen, die engen Bauräume und der Kostendruck zu einer Unterdimensionierung kritischer Bauteile, welche zum Versagen einer Systemkomponente und somit auch des Erzeugnisses führen können.

Beispielhaft seien hier Anforderungen an die Schüttelbelastbarkeit des Erzeugnisses bei einem Anbau an einen Verbrennungsmotor des Kraftfahrzeugs genannt. Die daraus resultierenden dynamischen Beanspruchungen der Erzeugnisse liegen oft weit oberhalb der zulässigen Beanspruchbarkeit. Fehlende oder ungenügende Werkstoffdämpfungen verursachen oftmals bei Schüttelbelastungen kritische Resonanzfrequenzen mit bis zu 20-facher Überhöhung der Anregung und beeinträchtigen somit die gewünschte Lebensdauer des Erzeugnisses stark. Hierbei hängt die Übertragungsintensität der Schwingungsenergie vom Schwingungserreger, also dem Verbrennungsmotor, an das daran befestigte Erzeugnis bis hin zu den Einzelteilen stark von der Verbindungsart der Bauteile und deren Materialdämpfungen ab.

Die Lebensdauer eines Erzeugnisses ist umgekehrt proportional zu dessen Belastungen, wobei die Beanspruchungen mittels einer Dämpfung entscheidend minimiert werden können. Hierzu eigenen sich hoch dämpfende Elastomerpuffer, z. B. aus EPDM (Ethylen-Propylen-Dien-Kautschuk), welche die Schwingungsenergie absorbieren und diese in innere Reibung umwandeln; es entsteht Wärme, die der Elastomerwerkstoff nach außen abstrahlt.

Hierbei wird das Dämpfungselement typischerweise als ein Halter-/Entkopplungselement zwischen dem Erzeugnis und dem Schwingungserreger montiert. Dies ist hinsichtlich Dämpfung eine effiziente Lösung, die jedoch aufgrund der geringen Steifigkeit des Elastomerhalters unerwünscht große Auslenkungen des Erzeugnisses verursacht und zu einer Kollision von Aggregaten führen kann. Problematisch sind insbesondere auch Anschlüsse am Erzeugnis bzw. einem daran angeschlossenem Aggregat. Ferner ist eine solche Lösung zum Einen mit einem zusätzlichen Einbauraum und Gewicht verbunden und zum Anderen bietet sie einen beschränkten Einsatz durch vordefinierte Verschraubungsstifte (keine Verschraubungsvarianz möglich). Um die Gefahr eines Losrüttelns des Erzeugnisses aus der Elastomerhalterung auszuschließen, ist oftmals ein zusätzliches Halteblech notwendig.
In EP 0 728 645 A2 erstrecken sich Pins von einem Bürstenhalter und einer Spule. Die Pins sind in eine elektrische Leiterplatte eingeführt und elektrisch mit der Leiterplatte verbunden.

### Aufgabenstellung

Es ist eine Aufgabe der Erfindung, eine verbesserte Systemkomponente für ein Kraftfahrzeug anzugeben. Hierbei sollen die dynamischen Belastungen, insbesondere in Bezug auf eine Schüttelbelastbarkeit der Bauteile der Systemkomponenten, insbesondere der Leiterplatten und Pin-Verbindungen minimiert sein. Hierbei soll kein oder nur möglichst wenig zusätzlicher Einbauraum benötigt werden und ein Gewicht der Systemkomponente soll sich nicht oder nur geringfügig erhöhen.

### Offenbarung der Erfindung

Die Aufgabe der Erfindung wird mittels einer Systemkomponente für ein Kraftfahrzeug, insbesondere einer Pumpenkomponente für eine Pumpe eines Kühlkreislaufs des Kraftfahrzeugs, gemäß Anspruch 1; und eine Pumpe, insbesondere eine Kühlkreislaufpumpe, für ein Kraftfahrzeug, gemäß Anspruch 10 gelöst. Vorteilhafte Weiterbildungen der Erfindung ergeben sich aus den abhängigen Ansprüchen.

Die erfindungemäße Systemkomponente weist ein Gehäuse und eine im/am Gehäuse untergebrachte bzw. vorgesehene Leiterplatte auf, wobei gemäß der Erfindung die Leiterplatte an einem funktionalen Bauteil der Systemkomponente montiert ist. Hierbei ist das funktionale Bauteil insbesondere eines, welches eine grundlegende mechanische und/oder elektrische/elektronische Aufgabe der Systemkomponente erfüllt. Hierbei weist die Leiterplatte zu einem Bereich des Gehäuses allseitig einen Abstand auf, ist also abseits des Gehäuses montiert.

D. h. gemäß der Erfindung gibt es nun keinen direkten mechanischen Kontakt zwischen dem Gehäuse und der Leiterplatte mehr, sondern nur noch einen mittelbaren über das funktionale Bauteil. Mittels des funktionales Bauteils ist die Leiterplatte im Gehäuse montiert, wobei das funktionale Bauteil die Leiterplatte haltert. Hierfür weist das funktionale Bauteil eine Befestigungseinrichtung, insbesondere eine Rasteinrichtung, einen Schnapphaken oder einen Zapfen auf, welche zu einer Befestigungseinrichtung, insbesondere einer durchgehenden Montagebohrung, der Leiterplatte korrespondierend ausgebildet ist, wodurch die Leiterplatte am funktionalen Bauteil montierbar ist.

Gemäß der Erfindung erfolgt primär eine mechanische Entkopplung zwischen der Leiterplatte und dem Gehäuse der Systemkomponente. Schwingungen des Gehäuses werden nicht mehr direkt in die Leiterplatte weitergegeben, wodurch die Leiterplatte nur noch zu einem weit geringeren Teil zu Schwingungen oder anderen mechanischen Belastungen angeregt wird. Gemäß der Erfindung werden dynamische Belastungen, insbesondere Schüttelbelastungen, der Leiterplatte und der Pin-Verbindungen der Leiterplatte minimiert. Hierbei kann das Gehäuse außerhalb der Leiterplatte um diese herum schwingen.

Ein mit dem Gehäuse stofflich einstückig ausgebildeter Rasthaken und ein ebenfalls mit dem Gehäuse stofflich einstückig ausgebildeter Anschlag für die Leiterplatte können gemäß der Erfindung entfallen, wobei der frei gewordene Platz anderweitig verwendet werden kann, so z. B. teilweise für die Befestigungseinrichtung. Hierdurch wird Bauraum und Gewicht eingespart. Ferner ist durch die Erfindung keine Neukonstruktion einer Kundenschnittstelle oder ein Anpassen des Erzeugnisses bzw. der Systemkomponente an die Kundenschnittstelle notwendig, da die Dämpfung nun nicht mehr außerhalb, zwischen dem Erzeugnis bzw. der Systemkomponente und der Kundenschnittstelle erfolgt, sondern erfindungsgemäß innerhalb des Erzeugnisses bzw. der Systemkomponente durch deren Umkonstruktion. Ein Dämpfungselement zwischen dem Erzeugnis bzw. der Systemkomponente und der Kundenschnittstelle ist natürlich weiterhin anwendbar.

In Ausführungsformen der Erfindung ist die Befestigungseinrichtung an dem funktionalen Bauteil vorgesehen. D. h. sie sitzt oder liegt daran an, oder ist mit diesem befestigt. Hierbei kann die Befestigungseinrichtung auch einstückig, insbesondere stofflich einstückig, mit dem funktionalen Bauteil oder einem Bereich des funktionalen Bauteils verbunden sein. Hierbei ist es bevorzugt, dass die Befestigungseinrichtung an demjenigen funktionalen Bauteil vorgesehen ist, welches in einem Vergleich mit dem Gehäuse eine höhere Steifigkeit besitzt.

In Ausführungsformen der Erfindung sind die Geometrien der zueinander korrespondierenden Befestigungseinrichtungen des funktionalen Bauteils und der Leiterplatte gegenseitig derart gewählt, dass axiale und/oder radiale Freiheitsgrade und/oder Toleranzen mittels axialer und/oder radialer Vorspannung zwischen dem funktionalen Bauteil und der Leiterplatte eliminiert sind. Hierbei ist bevorzugt die Rasteinrichtung des funktionalen Bauteils entsprechend ausgestaltet, wohingegen die Befestigungseinrichtung der Leiterplatte bevorzugt ein Durchgangsloch ist.

In bevorzugten Ausführungsformen erfolgt dies je Befestigungseinrichtung mit einem oder einer Mehrzahl von, insbesondere zwei parallel angeordneten, federnden Rasthaken. Dies kann aber z. B. auch derart erfolgen, dass in einem nicht montierten Zustand der Leiterplatte am funktionalen Bauteil, ein Montagebereich der Befestigungseinrichtung für die Leiterplatte enger ausgebildet ist, als ein dazu korrespondierender Montagebereich der Leiterplatte. Durch eine elastische Verformung der Befestigungseinrichtung bzw. der Rasteinrichtungen des funktionalen Bauteils bei der Montage der Leiterplatte werden dann die axialen und/oder radialen Freiheitsgrade und/oder Toleranzen ausgeglichen. Hierbei kann die Befestigungseinrichtung z. B. teilweise aus einem Elastomer oder einem anderen plastisch verformbaren Werkstoff bestehen.

In Ausführungsformen der Erfindung ist das funktionale Bauteil kein Dämpfungselement. Bevorzugt ist das funktionale Bauteil ein Stanzgitter, ein Spulenkörper oder ein sonstiges funktionales Bauteil der Systemkomponente. Ferner kann die Befestigungseinrichtung zusätzlich als eine Zentriereinrichtung, insbesondere als ein Zentrierdom, ausgebildet sein, mittels welchem dann das funktionale Bauteil im Gehäuse zentrier- bzw. positionierbar ist. Darüber hinaus kann das funktionale Bauteil axial mittels eines Dämpfungselements, insbesondere eines Elastomerelements, vorgespannt sein, welches sich bevorzugt am Gehäuse abstützt.

### Kurzbeschreibung der Figuren

Die Erfindung wird im Folgenden anhand von Ausführungsbeispielen unter Bezugnahme auf die beigefügte Zeichnung näher erläutert. In der schematischen Zeichnung zeigen:
- Fig. 1: eine geschnittene und weggebrochene zweidimensionale Seitenansicht einer Systemkomponente gemäß dem Stand der Technik; und
- Fig. 2: in einer geschnittenen und weggebrochenen zweidimensionalen Seitenansicht eine Ausführungsform einer erfindungsgemäßen Systemkomponente.

### Ausführungsformen der Erfindung

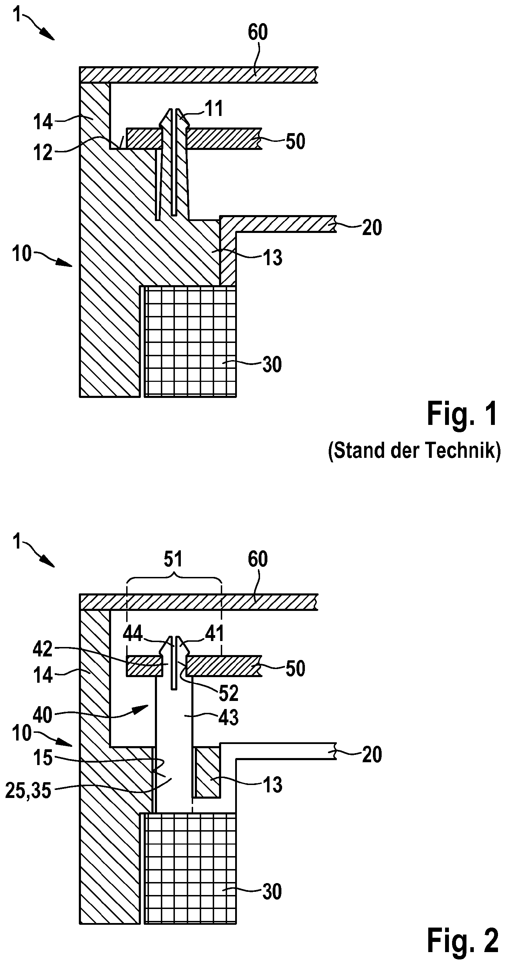

Die Fig. 1 zeigt einen Ausschnitt einer Kühlkreislaufpumpe 1 gemäß dem Stand der Technik für ein Kraftfahrzeug, wobei eine Leiterplatte 50 direkt und fest mit einem Gehäuse 10 der Kühlkreislaufpumpe 1 verbunden ist. Hierbei wird die Leiterplatte 50 von einem Rasthaken 11 und einem Anschlag 12 gehaltert, die beide integral mit dem Gehäuse 10 verbunden sind. Aufgrund der geringen mechanischen Dämpfung des Gehäuses 10 und einer vergleichsweise starren Verbindung zum Schwingungserreger, insbesondere einem Verbrennungsmotor des Kraftfahrzeugs, wird die Leiterplatte 50 stark zum Schwingen angeregt, was zu den Eingangs genannten Problemen führt. Bei der Herstellung des Gehäuses 10 wird ein Stanzgitter 20 und ein Spulenkörper 30 umspritzt, die dann an einem inneren Gehäusevorsprung 13 bzw. einem innen wenigstens teilweise umlaufenden Bund 13 anliegen bzw. ansitzen. Ein Deckel 60 verschleißt das Gehäuse 10 oberhalb der Leiterplatte 50.

Die Erfindung wird im Folgenden anhand einer als Kühlkreislaufpumpe 1 ausgebildeten Systemkomponente 1 für ein Kraftfahrzeug näher erläutert. Hierbei soll unter einer Systemkomponente 1 nicht nur eine Kühlkreislaufpumpe 1 verstanden werden, sondern ganz allgemein eine Baugruppe 1, ein Bauteil 1 oder ein Erzeugnis 1. So kann die Systemkomponente 1 z. B. auch eine Pumpenkomponente 1 der Kühlkreislaufpumpe 1 sein. Hierbei umfasst diese Pumpenkomponente 1 dann wenigstens ein Gehäuse 10 mit einem funktionalem Bauteil 20, 30, an/auf welchem dann eine Leiterplatte 50 bzw. eine Platine 50 montierbar ist. Hierbei kann ggf. ein oder können ggf. andere, auch funktionale Bauteile der Systemkomponente 1 schon am/im Gehäuse 10 vorgesehen sein.

Unter einem funktionalen Bauteil 20, 30 wird ein Bauteil oder eine Baugruppe verstanden, welches bzw. welche eine grundlegende mechanische und/oder elektrische/elektronische Aufgabe der Systemkomponente 1 erfüllt. D. h. ohne ein solches Bauteil würde das spätere Erzeugnis eine beabsichtigte Funktion, auch nur kurzfristig, prinzipiell nicht ausüben können. So wird unter einem funktionalen Bauteil insbesondere ein Stanzgitter 20 und/oder ein Spulenkörper 30 verstanden, auch eine Leiterplatte 50 wäre ein solches funktionales Bauteil. Ein Dämpfungselement, eine Dichtung, ein Distanzring u. ä. wären keine solchen funktionalen Bauteile, da diese nicht unbedingt für die prinzipielle Funktion der Systemkomponente 1 bzw. des Erzeugnisses notwendig sind.

Gemäß der Erfindung erfolgt eine mechanische Entkopplung der Leiterplatte 50 vom Gehäuse 10, was die Schwingungsamplituden der Leiterplatte 50 wesentlich reduziert und somit die Lebensdauer der Systemkomponente 1 erhöht. Gemäß der Erfindung wird ein Gehäuse 10 mit einem funktionalem Bauteil 20, 30 bereitgestellt, an/auf welchem eine Leiterplatte 50 montierbar ist. D. h im montierten Zustand der Leiterplatte 50, ist die Leiterplatte 50 am funktionalen Bauteil 20, 30 montiert bzw. befestigt bzw. vorgesehen. Hierbei zeigt die Fig. 2 eine beispielhafte erfindungsgemäße Ausführungsform.

Eine Befestigung der Leiterplatte 50 an/auf dem funktionalen Bauteil 20, 30 erfolgt mittels zweier Befestigungseinrichtungen 40, 52, die an diesen beiden Partnern vorgesehen bzw. ausgebildet sind. Hierfür sind die Befestigungseinrichtungen 40, 52, zueinander korrespondierend aufgebaut und befestigen in einem Montagezustand der Leiterplatte 50 diese am/auf dem funktionalen Bauteil 20, 30. Bevorzugt ist diese Befestigung als eine Steck- bzw. Rastverbindung ausgebildet. Hierfür weist bevorzugt das funktionale Bauteil 20, 30 eine Rasteinrichtung 40, insbesondere einen Schnapphaken 40, einen Zapfen 40 oder einen Rasthaken 40, und die Leiterplatte 50 eine dazu korrespondierende Rasteinrichtung 52, insbesondere eine Montagebohrung 50 auf, die bevorzugt als eine Durchgangsbohrung 52 ausgebildet ist. Dies kann natürlich auch statisch umgekehrt ausgebildet sein.

Eine Geometrie der jeweilig zueinander korrespondierenden Rasteinrichtungen 40, 52, ist derart gewählt, dass in einem montierten Zustand der Leiterplatte 50 an/auf dem funktionalen Bauteil 20, 30, die radialen und/oder axialen Freiheitsgrade der Leiterplatte 50 durch eine radiale und bevorzugt auch axiale mechanische Vorspannung eliminiert werden. Entsprechende Federwege bzw. Unter-/Übermaße sind derart gewählt, dass bei allen Toleranzlagen der Leiterplatte 50 und des funktionalen Bauteils 20, 30 eine Vorspannung und somit ein fester Halt der Leiterplatte 50 an/auf dem funktionalen Bauteil 20, 30 gegeben ist.

In einer bevorzugten Ausführungsform besitzt die Befestigungseinrichtung 40 drei Abschnitte 41, 42, 43, wobei zwischen einem freien Längsendabschnitt, an dem eine Rastvorrichtung 41 vorgesehen ist, und einem gebundenen Längsendabschnitt 43 ein Befestigungsbereich 42 ausgebildet ist. Der Befestigungsbereich 42 wird in Richtung freiem Längsendabschnitt von der Rastvorrichtung 41 und in Richtung gebundenem Längsendabschnitt 43 von einem Bund des gebundenen Längsendabschnitt 43 begrenzt. Auf diesem Befestigungsbereich 42 zwischen der Rastvorrichtung 41 und dem Bund sitzt in einer Montageposition die Leiterplatte 50 mit ihrem Montagebereich 51, also ihrer Rasteinrichtung 52, die in der Fig. 2 als Durchgangsbohrung 52 ausgebildet ist.

Die Rastvorrichtung 41 weist dabei bevorzugt zwei parallel angeordnete Rasthaken auf, die ein Schlitz 44 voneinander trennt, welcher die entsprechenden Federwege für die Rasthaken bereitstellt. Der Schlitz 44 erstreckt sich dabei vom freien Ende der Rastvorrichtung 41 in den zweiten Abschnitt 42 der Befestigungseinrichtung 40 hinein. In Ausführungsformen der Erfindung kann sich der Schlitz 44 durch den zweiten Abschnitt 42 hindurch bis in den gebundenen Abschnitt 43 der Befestigungseinrichtung 40 hinein erstrecken.

Die Befestigungseinrichtung 40 für die Leiterplatte 50 ist ein Abschnitt des funktionalen Bauteils 20, 30. Hierbei kann die Befestigungseinrichtung 40 einstückig, auch stofflich einstückig, mit dem funktionalen Bauteil 20, 30 ausgebildet sein. Ferner kann die Befestigungseinrichtung 40 am funktionalen Bauteil 20, 30 anliegen bzw. ansitzen, oder mit diesem fest verbunden sein, z. B. über eine Steck- oder Rastverbindung. Vorliegend ist das funktionale Bauteil 20, 30 bevorzugt ein Stanzgitter 20 oder ein Spulenkörper 30. Hierbei kann die Befestigungseinrichtung 40 aus dem Material des Stanzgitters 20 bestehen oder an diesem befestigt sein und beispielsweise einen Kunststoff aufweisen. Ist die Befestigungseinrichtung 40 Teil des Spulenkörpers 30, so ist es bevorzugt, am Spulenkörper 30 eine entsprechende Befestigungseinrichtung 40 aus einem Kunststoff vorzusehen, z. B. anzukleben.

Ein innerer Gehäusevorsprung 13 oder ein innen im Gehäuse 10 wenigstens teilweise umlaufender Bund 13 dient als eine Anlage des funktionalen Bauteils 20, 30 bzw. des Stanzgitters 20 oder des Spulenkörpers 30 der Kühlkreislaufpumpe 1, wobei in einem Abschnitt des Gehäusevorsprungs 13 bzw. Bunds 13 eine Durchgangsausnehmung 15 für die Befestigungseinrichtung 40 vorgesehen ist. Es ist jedoch auch möglich, die Befestigungseinrichtung 40 frei stehend vorzusehen.

Diese Durchgangsausnehmung 15 kann ferner als eine Zentriereinrichtung 15 dienen. Für die Zentrierung weist das funktionale Bauteil 20, 30 bzw. das Stanzgitter 20 oder der Spulenkörper 30 wenigstens einen Zentrierdom 25, 35 auf, der durch den Gehäusevorsprung 13 bzw. den Bund 13 hindurch greift. Hierbei ist der Zentrierdom 25, 35 Teil der Befestigungseinrichtung 40, insbesondere Teil des gebundenen Längsendabschnitts 43 der Befestigungseinrichtung 40. Insbesondere können gemäß der Erfindung die Zentrierdome 35 gemäß dem Stand der Technik des Spulenkörpers 30, die für seine Positionierung sorgen, umkonstruiert werden, sodass die Zentrierdome 35 zugleich zur Aufnahme und Befestigung der Leiterplatte 50 dienen. Somit ist die Leiterplatte 50 vom Gehäuse 10 mechanisch entkoppelt.

Eine Eignung des Stanzgitters 20 oder des Spulenkörpers 30 als ein Träger für die Leiterplatte 50 beruht auf seinem geringen Schwingverhalten und im Falle des Spulenkörpers 30 seiner hohen Stabilität. Der Spulenkörper 30 ist ferner axial bevorzugt mittels eines Elastomerformrings oder einem ähnlichen Dämpfungs- oder Federelement verpresst, womit er vom Gehäuse 10 mechanisch entkoppelt und nur geringfügig anregbar ist. Dies haben Messungen einer Kühlkreislaufpumpe 1 deutlich gezeigt, wobei Schwingungsamplituden des Spulenkörpers 30 aufgrund seiner axialen Vorspannung und seiner steifen Struktur wesentlich geringer als die des Gehäuses 10 sind. Somit ergibt sich bei der Montage bzw. Befestigung der Leiterplatte 50 auf dem Spulenkörper 30 eine wesentliche Reduzierung von Beschleunigungsamplituden der Leiterplatte 50, was sich wiederum positiv hinsichtlich einer Geräuschentwicklung und einer Lebensdauer von elektronischen Komponenten und Lötverbindungen der Leiterplatte 50 auswirkt.

## Patentansprüche

1. Systemkomponente für ein Kraftfahrzeug, insbesondere Pumpenkomponente (1) für eine Pumpe eines Kühlkreislaufs des Kraftfahrzeugs, mit einem Gehäuse (10) und einer im Gehäuse (10) untergebrachten Leiterplatte (50), **dadurch gekennzeichnet, dass**
die Leiterplatte (50) abseits des Gehäuses (10) an einem Stanzgitter (20) oder einem Spulenkörper (30) der Systemkomponente (1) montiert ist, wobei das Stanzgitter (20) oder der Spulenkörper (30) eine Befestigungseinrichtung (40) für die Leiterplatte (50) aufweist,
wobei die Befestigungseinrichtung (40) für die Leiterplatte (50) als eine Rasteinrichtung (40), ein Schnapphaken (40), ein Zapfen (40) oder ein Rasthaken (40) ausgebildet ist.

2. Systemkomponente gemäß Anspruch 1, **dadurch gekennzeichnet, dass** die Leiterplatte (50) zu einem inneren Bereich (13, 14) des Gehäuses (10) allseitig einen Abstand aufweist.

3. Systemkomponente gemäß einem der Ansprüche 1 bis 2, **dadurch gekennzeichnet, dass** die Befestigungseinrichtung (40) an dem Stanzgitter (20) oder dem Spulenkörper (30)ansitzt oder vorgesehen ist, wobei die Befestigungseinrichtung (40) bevorzugt einstückig, insbesondere stofflich einstückig, mit dem Stanzgitter (20) oder dem Spulenkörper (30)oder einem Bereich des Stanzgitters (20) oder des Spulenkörpers (30)verbunden ist.

4. Systemkomponente gemäß einem der Ansprüche 1 bis 3, **dadurch gekennzeichnet, dass** die Befestigungseinrichtung (40) an demjenigen Stanzgitter (20) oder demjenigen Spulenkörper (30) ansitzt oder vorgesehen ist, welches in einem Vergleich mit dem Gehäuse (10) eine höhere Steifigkeit besitzt.

5. Systemkomponente gemäß einem der Ansprüche 1 bis 4, **dadurch gekennzeichnet, dass** eine Geometrie der Befestigungseinrichtung (40) und eine Geometrie eines Montagebereichs (51) der Leiterplatte (50) gegenseitig derart gewählt sind, dass
axiale und/oder radiale Freiheitsgrade der Leiterplatte (50) gegenüber der Befestigungseinrichtung (40) mittels axialer und/oder radialer Vorspannung zwischen der Befestigungseinrichtung (40) und der Leiterplatte (30) eliminiert sind.

6. Systemkomponente gemäß einem der Ansprüche 1 bis 5, **dadurch gekennzeichnet, dass** das Stanzgitter (20) oder der Spulenkörper (30)kein Dämpfungselement ist.

7. Systemkomponente gemäß einem der Ansprüche 1 bis 6, **dadurch gekennzeichnet, dass** die Befestigungseinrichtung (40) zusätzlich als eine Zentriereinrichtung (25, 35), insbesondere als ein Zentrierdom (25, 35), des Stanzgitters (20) oder des Spulenkörpers (30)ausgebildet ist.

8. Systemkomponente gemäß einem der Ansprüche 1 bis 7, **dadurch gekennzeichnet, dass** das Stanzgitter (20) oder der Spulenkörper (30) axial mittels eines Dämpfungselements, insbesondere eines Elastomerelements, vorgespannt ist.

9. Pumpe, insbesondere Kühlkreislaufpumpe, für ein Kraftfahrzeug, mit einer Systemkomponente (1) nach einem der Ansprüche 1 bis 8.

## Claims

1. System component for a motor vehicle, in particular pump component (1) for a pump of a cooling circuit of the motor vehicle, having a housing (10) and having a circuit board (50) which is accommodated in the housing (10), **characterized in that**
the circuit board (50) is mounted, remote from the housing (10), on a leadframe (20) or on a coil body (30) of the system component (1), wherein the leadframe (20) or the coil body (30) has a fastening device (40) for the circuit board (50),
wherein the fastening device (40) for the circuit board (50) is in the form of a detent device (40), a snap-action hook (40), a peg (40) or a detent hook (40).

2. System component according to Claim 1, **characterized in that** the circuit board (50) has a spacing on all sides to an inner region (13, 14) of the housing (10).

3. System component according to either of Claims 1 and 2, **characterized in that** the fastening device (40) is seated or provided on the leadframe (20) or the coil body (30), wherein the fastening device (40) is connected preferably integrally, in particular materially integrally, to the leadframe (20) or to the coil body (30) or to a region of the leadframe (20) or of the coil body (30).

4. System component according to one of Claims 1 to 3, **characterized in that** the fastening device (40) is seated or provided on that leadframe (20) or that coil body (30) which has a higher stiffness than the housing (10).

5. System component according to one of Claims 1 to 4, **characterized in that** a geometry of the fastening device (40) and a geometry of a mounting region (51) of the circuit board (50) are selected relative to one another such that
axial and/or radial degrees of freedom of the circuit board (50) relative to the fastening device (40) are eliminated by way of axial and/or radial preload between the fastening device (40) and the circuit board (50).

6. System component according to one of Claims 1 to 5, **characterized in that** the leadframe (20) or the coil body (30) is not a damping element.

7. System component according to one of Claims 1 to 6, **characterized in that** the fastening device (40) is additionally in the form of a centring device (25, 35), in particular in the form of a centring dome (25, 35), of the leadframe (20) or of the coil body (30).

8. System component according to one of Claims 1 to 7, **characterized in that** the leadframe (20) or the coil body (30) is preloaded axially by way of a damping element, in particular an elastomer element.

9. Pump, in particular cooling circuit pump, for a motor vehicle, having a system component (1) according to one of Claims 1 to 8.

## Revendications

1. Composant de système pour un véhicule automobile, en particulier composant de pompe (1) pour une pompe d'un circuit de refroidissement du véhicule automobile, comprenant un boîtier (10) et une carte à circuits imprimés (50) montée dans le boîtier (10),
**caractérisé en ce que**
la carte à circuits imprimés (50) est montée du côté du boîtier (10) sur une grille estampée (20) ou sur un corps de bobine (30) du composant de système (1), la grille estampée (20) ou le corps de bobine (30) présentant un dispositif de fixation (40) pour la carte à circuits imprimés (50),
le dispositif de fixation (40) pour la carte à circuits imprimés (50) étant réalisé sous la forme d'un dispositif d'encliquetage (40), d'un crochet enclipsable (40), d'un tourillon (40) ou d'un crochet d'encliquetage (40).

2. Composant de système selon la revendication 1, **caractérisé en ce que** la carte à circuits imprimés (50) présente de tous les côtés une distance par rapport à une région interne (13, 14) du boîtier (10).

3. Composant de système selon l'une quelconque des revendications 1 à 2, **caractérisée en ce que** le dispositif de fixation (40) s'applique ou est prévu contre la grille estampée (20) ou le corps de bobine (30), le dispositif de fixation (40) étant de préférence connecté d'une seule pièce, en particulier d'une seule pièce par liaison de matière, à la grille estampée (20) ou au corps de bobine (30) ou à une région de la grille estampée (20) ou du corps de bobine (30).

4. Composant de système selon l'une quelconque des revendications 1 à 3, **caractérisé en ce que** le dispositif de fixation (40) s'applique ou est prévu contre la grille estampée (20) ou le corps de bobine (30) qui possède une plus grande rigidité par rapport au boîtier (10).

5. Composant de système selon l'une quelconque des revendications 1 à 4, **caractérisé en ce qu'**une géométrie du dispositif de fixation (40) et une géométrie d'une région de montage (51) de la carte à circuits imprimés (50) sont choisies de manière mutuelle de telle sorte que
les degrés de liberté axiaux et/ou radiaux de la carte à circuits imprimés (50) par rapport au dispositif de fixation (40) soient éliminés au moyen d'une précontrainte axiale et/ou radiale entre le dispositif de fixation (40) et la carte à circuits imprimés (30).

6. Composant de système selon l'une quelconque des revendications 1 à 5, **caractérisé en ce que** la grille estampée (20) ou le corps de bobine (30) n'est pas un élément d'amortissement.

7. Composant de système selon l'une quelconque des revendications 1 à 6, **caractérisé en ce que** le dispositif de fixation (40) est réalisé en outre sous forme de dispositif de centrage (25, 35), en particulier sous forme de mandrin de centrage (25, 35) de la grille estampée (20) ou du corps de bobine (30).

8. Composant de système selon l'une quelconque des revendications 1 à 7, **caractérisé en ce que** la grille estampée (20) ou le corps de bobine (30) est précontraint axialement au moyen d'un élément d'amortissement, en particulier d'un élément élastomère.

9. Pompe, en particulier pompe de circuit de refroidissement pour un véhicule automobile, comprenant un composant de système (1) selon l'une quelconque des revendications 1 à 8.
